(19)

**Europäisches Patentamt**
**European Patent Office**
**Office européen des brevets**

(11)  **EP 3 855 364 A1**

(12)  **EUROPEAN PATENT APPLICATION**

(43) Date of publication:
**28.07.2021 Bulletin 2021/30**

(51) Int Cl.:
**G06N 3/04** *(2006.01)*          **G06N 3/08** *(2006.01)*
**G06N 7/00** *(2006.01)*          **G06N 20/00** *(2019.01)*
**G06N 20/10** *(2019.01)*

(21) Application number: **20153736.2**

(22) Date of filing: **24.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Secondmind Limited**
**Cambridge, Cambridgeshire CB2 1LA (GB)**

(72) Inventors:
• **PICHENY, Victor**
**Cambridge, Cambridgeshire CB2 1LA (GB)**

• **DUTORDOIR, Vincent**
**Cambridge, Cambridgeshire CB2 1LA (GB)**
• **ARTEMEV, Artem**
**Cambridge, Cambridgeshire CB2 1LA (GB)**
• **DURRANDE, Nicolas**
**Cambridge, Cambridgeshire CB2 1LA (GB)**

(74) Representative: **EIP**
**Fairfax House**
**15 Fulwood Place**
**London WC1V 6HU (GB)**

(54)  **TRAINING MACHINE LEARNING MODELS**

(57)     A computer-implemented method of determining a first learning rate schedule for a first machine learning task in a given class of machine learning tasks. Performing any task in the class includes training a respective machine learning model using a respective dataset, where the training involves updating values of a respective set of parameters for the respective machine learning model in accordance with a sequence of stochastic gradient steps to increase or decrease a value of an objective function for providing performance measures in dependence on changes to the values of the respective set of parameters. The method includes storing, for each of a plurality of machine learning tasks in the given class, trace data indicative of one or more optimisation traces each comprising stochastic estimates of the objective function as values of the respective set of parameters for the respective machine learning model are updated in accordance with a sequence of stochastic gradient steps using a respective learning rate schedule. The method further includes processing the trace data for the plurality of machine learning tasks to generate a probabilistic trace model operable to generate, in dependence on a given learning rate schedule and a latent variable indicating a given machine learning task in the class, a predicted optimisation trace for the given machine learning task. The method includes generating, for each of a plurality of candidate learning rate schedules, a predicted optimisation trace for the first machine learning task using the probabilistic trace model, then determining the first learning rate schedule from the plurality of candidate learning rate schedules on the basis of the generated predicted optimisation traces.

Fig. 3

**Description**

Technical Field

The present invention relates to the computational implementation of machine learning models. The invention has particular relevance to the training of multiple machine learning models of a given class.

Background

Machine learning involves a computer system learning how to analyse input data to determine an output, rather than being programmed explicitly how to do so by a user. In order for a machine learning model to be useful, the model must be trained using a training dataset. For supervised learning, the training dataset includes labelled training data. For unsupervised learning, the training dataset includes unlabelled training data. For reinforcement learning, the training dataset includes experience data indicating states, actions and rewards encountered by a reinforcement learning agent.

Generally, a machine learning model is parameterised by a set of parameters which may be expressed as a parameter vector 0, and has an associated objective function $\mathcal{L}$ , which provides performance measures of the model as the parameter vector is modified during training (for example, how well the model fits the training dataset in supervised or unsupervised learning).

Many types of machine learning model can be trained using stochastic gradient methods, which are defined by an iterative update rule as shown in Equation (1):

$$\theta_{t+1} = \theta_t \pm \alpha_t P^{-1} g_t, \qquad\qquad (1)$$

in which: $\theta_t$ is the value of the parameter vector at iteration $t$; $\pm$ corresponds to gradient ascent/descent; $g_t$ is an unbiased stochastic estimate of the gradient $\nabla_\theta \mathcal{L}|_{\theta=\theta_t}$ of the objective function at iteration $t$; $P$ is a preconditioning matrix that affects the direction and the size of the update; and $\alpha_t$ is a learning rate or step size at iteration $t$. The gradient estimate $g_t$ is typically calculated using reverse-mode differentiation or backpropagation for one or more randomly-sampled data points within the training dataset.

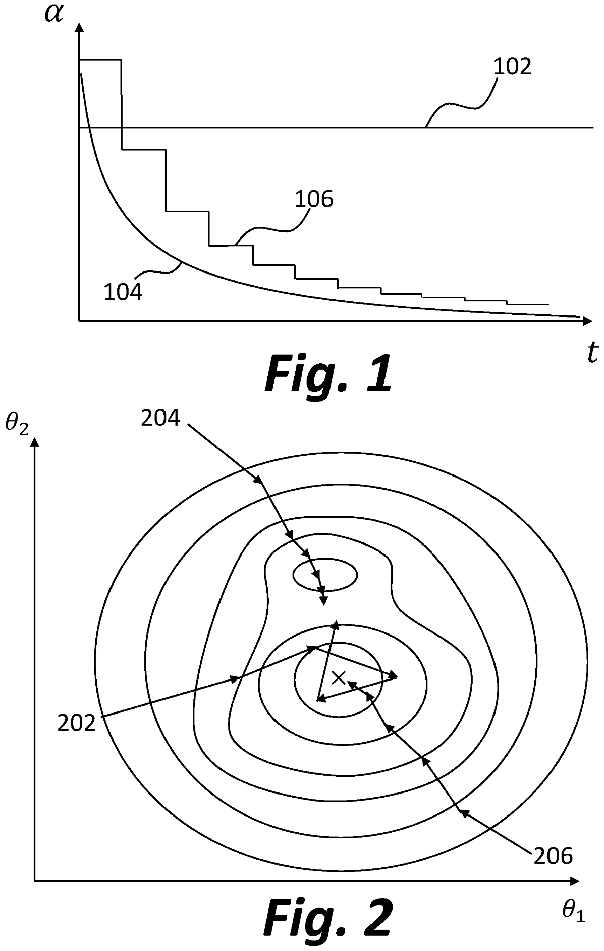

Conventionally, stochastic gradient methods are implemented using either a fixed learning rate or a learning rate which varies according to a predetermined schedule. Figure 1 shows three examples of learning rate schedules as commonly employed in the art. The horizontal line 102 represents a fixed learning rate $\alpha_t = k_0$, the curve 104 represents an exponentially decaying learning rate $\alpha_t = k_1 e^{-t/\gamma_1}$, and the stepped line 106 represents a learning rate which remains constant within epochs of a predetermined number of iterations, and decays exponentially between the epochs as $\alpha_t = k_2 e^{-\text{epoch}/\gamma_2}$. For a fixed learning rate, the magnitude of the gradient update is proportional to the magnitude of the stochastic gradient estimate. If the learning rate is too high, the parameters may fail to converge to true optimal values. If the learning rate is too low, the parameters are likely to become stuck at suboptimal values, or otherwise to take a prohibitively large number of iterations to converge. Choosing an exponentially decreasing learning rate has been found to mitigate these effects to some extent, because the values of the parameters go through much larger updates initially when far from their optimal values, and smaller, fine-tuning updates when close to the global optimum. However, without prior knowledge of the optimisation surface, it is difficult to tune the parameters $k$, $\gamma$, and for poorly chosen parameters, the same issues arise as for a fixed learning rate.

Figure 2 shows contour lines of an objective function $\mathcal{L}$ in a two-dimensional parameter space with $\theta = (\theta_1, \theta_2)^\mathsf{T}$. The global optimum of $\mathcal{L}$ is shown by a cross. The optimisation path 202 (including 5 update steps) illustrates a possible effect of choosing an exponentially decaying learning rate which decays too slowly. It is observed that the path 202 does not converge to the true optimum, and instead repeatedly overshoots the optimum. The optimisation path 204 illustrates a possible effect of choosing an exponentially decaying learning rate which decays too quickly. It is observed that the path 204 does not reach the global optimum and instead gets stuck at a non-critical point. Finally, the optimisation path 206 illustrates the effect of choosing a well-tuned exponentially decaying learning rate. It is observed that the path 206 converges gracefully to the global optimum in a practicable number of iterations.

For high-dimensional parameter spaces which are typical of machine learning models, an appropriate learning rate schedule is critical to the performance of the stochastic gradient method, and hence the practicability of the model. However, as mentioned above, very little guidance is generally available for choosing the learning rate schedule. As a result, practitioners typically rely on rules of thumb, trial and error, grid searches or random search methods. These methods can be exceptionally burdensome, limiting the efficiency with which machine learning models can be trained.

In certain cases, a single machine learning model is trained using multiple different datasets. Such a situation arises, for example, when a well-established image classification model is used to classify various different image datasets. In other cases, multiple machine learning models are trained using a common dataset. Such a case arises, for example, during model selection, in which different machine learning models are evaluated against each other using a common benchmark dataset. Even if a suitable learning rate schedule is determined for a given machine learning task, there is no guarantee that the same learning rate schedule will be suitable if the model and/or dataset are changed, and therefore the time-consuming and computationally expensive procedure of determining a suitable learning rate schedule must be performed independently for each new training instance.

Summary

According to a first aspect of the present invention, there is provided a computer-implemented method of determining a first learning rate schedule for a first machine learning task in a given class of machine learning tasks. Performing any task in the class includes training a respective machine learning model using a respective dataset, where the training involves updating values of a respective set of parameters for the respective machine learning model in accordance with a sequence of stochastic gradient steps to increase or decrease a value of an objective function for providing performance measures in dependence on changes to the values of the respective set of parameters. The method includes storing, for each of a plurality of machine learning tasks in the given class, trace data indicative of one or more optimisation traces each comprising stochastic estimates of the objective function as values of the respective set of parameters for the respective machine learning model are updated in accordance with a sequence of stochastic gradient steps using a respective learning rate schedule. The method further includes processing the trace data for the plurality of machine learning tasks to generate a probabilistic trace model operable to generate, in dependence on a given learning rate schedule and a latent variable indicating a given machine learning task in the class, a predicted optimisation trace for the given machine learning task. The method includes generating, for each of a plurality of candidate learning rate schedules, a predicted optimisation trace for the first machine learning task using the probabilistic trace model, then determining the first learning rate schedule from the plurality of candidate learning rate schedules on the basis of the generated predicted optimisation traces.

Leveraging trace data from the plurality of machine learning tasks results in a probabilistic trace model which takes into account latent information underlying the given class of machine learning tasks. Learning rate schedules determined using the resultant trace model have a high probability of being close to optimal for machine learning tasks in the given class. The method does not modify any of the machine learning models themselves, but provides input parameters in the form of learning rate schedules for training the machine learning models that result in improved performance when judged using technical criteria, such as the total number of processing operations used in the training process.

Further features and advantages of the invention will become apparent from the following description of preferred embodiments of the invention, given by way of example only, which is made with reference to the accompanying drawings.

Brief Description of the Drawings

Figure 1 is a graph of three curves representing examples of learning rate schedules, in accordance with the prior art.
Figure 2 shows schematically three optimisation paths corresponding to the three learning rates schedules of Figure 1.
Figure 3 is a schematic block diagram showing a data processing system arranged in accordance with an embodiment of the present invention.
Figure 4 is a flow diagram representing a method of training a data processing system to perform machine learning tasks in accordance with an embodiment of the present invention.
Figure 5 is a graph showing an example of a piecewise constant learning rate schedule.
Figure 6 shows an optimisation trace predicted using a trace model in accordance with an embodiment of the invention.
Figure 7 shows results of a numerical experiment in which machine learning tasks were performed in accordance with an embodiment of the present invention.

Detailed Description

The present disclosure relates to methods and systems for performing machine learning tasks within a given class. Each machine learning task in the given class involves training a respective machine learning model using a respective dataset. In some examples, different tasks in a class share a common machine learning model but have respective different training datasets. In some examples, different tasks in a class share a common training dataset, but have respective different machine learning models. In some examples, different tasks in a class have different machine learning tasks and different training datasets. In some examples, a class of machine learning tasks is defined broadly, for example to include training any suitable classification model using any dataset of a given format (for example, images of a predetermined size). In other examples, a class is defined more narrowly, for example to include training a small group of closely-related regression models using a specific dataset (for example, a specific set of audio clips). The machine learning tasks within a given class share a common objective function (which may be referred to as an optimisation objective, a loss function or a cost function depending on the context) which provides performance measures for a given machine learning model when applied to a given dataset as parameter values for the machine learning model are changed during training.

The machine learning model for a given task may be any type of machine learning model trainable using stochastic gradient methods, for example a supervised learning model, an unsupervised learning model or a model associated with a reinforcement learning algorithm. The machine learning model may include one or more artificial neural networks, support vector machines, Gaussian processes or the like. The machine learning model has an associated set of machine learning model parameters, and training the machine learning model amounts to modifying the values of the machine learning model parameters until the machine learning model fits the given dataset according to some predetermined criteria. The machine learning model may also have hyperparameters reflecting model selection, the values of which are not modified during the training procedure. For example, in the case of a machine learning model including an artificial neural network, the hyperparameters may encode information relating to the network architecture.

Training a machine learning model in accordance with the present invention is achieved by iteratively updating the values of the parameters of the machine learning model using a stochastic gradient method as shown in Equation (1) above to increase or decrease the associated objective function. Specific stochastic gradient methods differ from one another other by using different preconditioning matrices. For example, for ordinary stochastic gradient descent, the preconditioning matrix P is an identity matrix. For Adam, $P$ is a diagonal matrix with elements

$$P_{ii} = \left(\sqrt{v_i} + \epsilon\right) m_i^{-1},$$ where $m_i$ and $v_i$ are the bias-corrected exponential moving averages of the components $[g_t]_i$

and $([g_t]_i)^2$ respectively, and $\epsilon$ is a fixed small number (for example, $\epsilon = 10^{-8}$ or any other suitably small number). For Limited-Memory Broyden-Fletcher-Goldfarb-Shanno (L-BFGS), $P$ is an approximation of a Hessian matrix. For natural gradient descent, $P$ is a Fisher information matrix.

**Example data processing system**

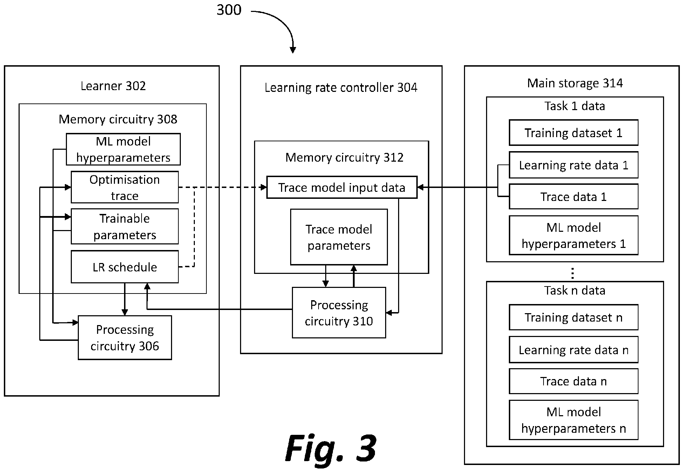

Figure 3 shows an example of a data processing system 300 arranged to perform machine learning tasks in a given class. The data processing system 300 includes various additional components not shown in Figure 3 such as input/output devices, network interfaces, and the like. The data processing system 300 includes a learner 302 and a learning rate controller 304. The learner 302 is arranged to train machine learning models using a stochastic gradient method with learning rate schedules determined by the learning rate controller 304. The learner 302 has associated processing circuitry 306 and memory circuitry 308, and the learning rate controller 304 has associated processing circuitry 310 and memory circuitry 312.

In the present example, the processing circuitry 306 of the learner 302 includes a neural network accelerator (also known as a neural processing unit (NPU)), and the memory circuitry 308 of the learner 302 includes volatile random-access memory (RAM), in particular static random-access memory (SRAM) and dynamic random-access memory (DRAM). In other examples, a learner may include, alternatively or additionally, one or more other processors, for example a graphics processing unit (GPU) and/or a central processing unit (CPU). In this example, the processing circuitry 310 of the learning rate controller 304 includes an application-specific integrated circuit (ASIC) including logic gates arranged specifically to perform the processing functions of the learning rate controller 304, as will be set out in detail hereafter. In this example, the memory circuitry 312 of the learning rate controller 304 includes further RAM In other examples, the functions of the processing circuitry 310 is implemented using, additionally or alternatively, an NPU, a GPU, a CPU, a digital signal processor (DSP), or any other suitable type of processor or processors. Although the memory circuitry 308 of the learner 302 and the memory circuitry 312 of the learning rate controller 304 are shown as being separate from one another, those skilled in the art will appreciate that the learner 302 and the learning rate controller 304 could alternatively share memory, for example with different portions of the memory being allocated dynamically to the different components.

In the present example, the data processing system 300 is a standalone computing device. In other examples, a learner and learning rate controller may be implemented as a compute cluster or as a distributed system connected by a network such a local area network (LAN), a wide area network (WAN), the Internet, or any other suitable network.

A learning rate controller and learner may be implemented using separate processing circuitry, as shown in the case of the data processing system 300, or may share common processing circuitry.

The data processing system 300 further includes main storage 314, which in this example is a solid-state drive (SSD) for non-volatile storage of relatively large volumes of data. In other examples, main storage may additionally or alternatively include a hard disk drive and/or removable storage devices. The main storage 314 is accessible by the learner 302 and the learning rate controller 304.

During operation of the data processing system 300, the main storage 314 stores data relating to a set of machine learning tasks within a given class of machine learning tasks. The main storage 314 stores, for each of the machine learning tasks in the set, values for a respective set of hyperparameters defining a respective machine learning model, along with a respective training dataset. The main storage 314 also stores learning rate data and trace data for each of the tasks in the initial set. The learning rate data for a given task is indicative of one or more learning rate schedules defining a sequence of learning rates for a stochastic gradient method. In the present example, each learning rate schedule is a piecewise constant learning rate schedule, as will be explained in more detail hereafter. The trace data is indicative of optimisation traces generated using the one or more learning rate schedules, where each optimisation trace is formed of stochastic estimates of an objective function as parameter values for a respective machine learning model are updated using the stochastic gradient method with the corresponding learning rate schedule. The trace data stored within the main storage 314 may be historic trace data gathered from one or more sources, and/or may include trace data generated by the data processing system 300, either using predetermined learning rate schedules (for example, determined in accordance with a space-filling design), or using random learning rate schedules. The trace data may further include informative trace data corresponding to informative tasks designed to improve the predictive accuracy of a probabilistic trace model, as will be described in more detail hereafter.

The memory circuitry 308 of the learner 302 stores, at a given time, hyperparameter values defining a machine learning model, values for a set of trainable parameters for the machine learning model, a current learning rate schedule, and an optimisation trace generated during training of the machine learning model using a stochastic gradient method with the current learning rate schedule.

The memory circuitry 312 of the learning rate controller 304 is arranged to temporarily hold trace data received from the main storage 314 and/or the learner 302. The trace data is used to update parameters values for a probabilistic trace model for predicting optimisation traces as will be described in more detail hereafter. The learning rate controller 304 is arranged to generate the probabilistic trace model, and to determine learning rate schedules for further machine learning tasks on the basis of the probabilistic trace model.

**Example training method**

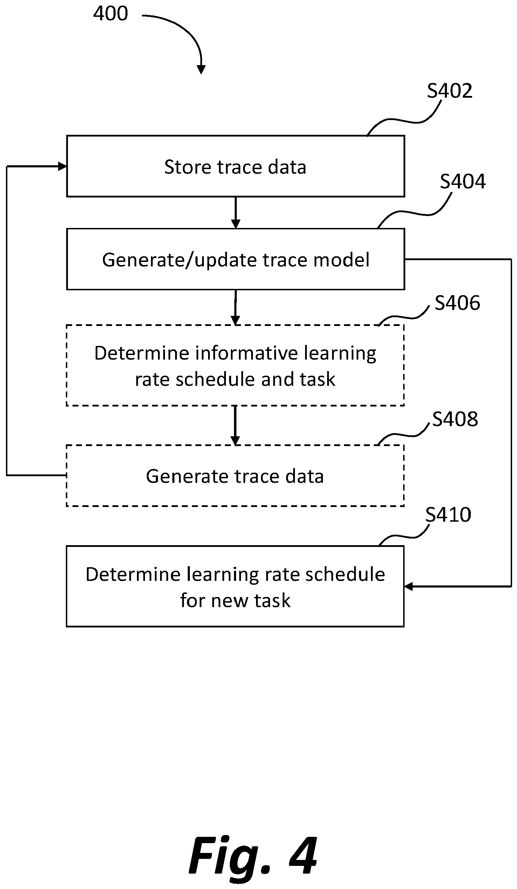

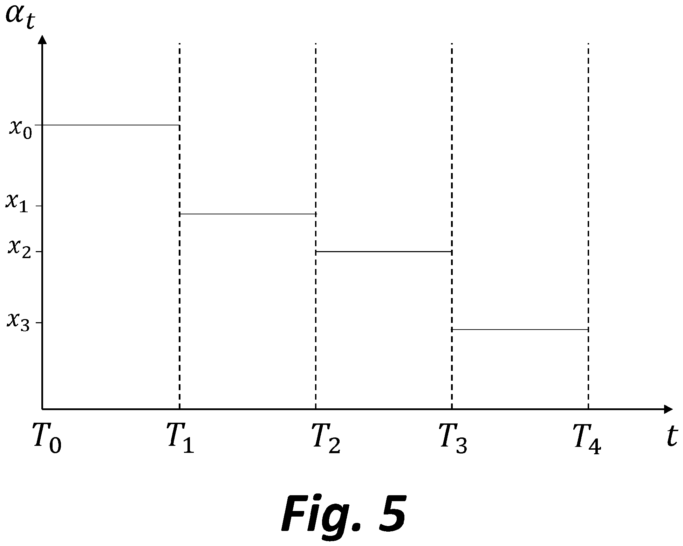

Figure 4 shows an example of a method of determining a learning rate schedule for a machine learning task in a given class. The method may be implemented using any suitable data processing system, such as the data processing system 300 described with reference to Figure 3. The method begins with storing, at S402, trace data for an initial set of $M$ tasks in the given class, where each task in the initial set involves training a respective machine learning model using a respective dataset. The trace data for each task is indicative of one or more optimisation traces each including stochastic estimates of the objective function $\mathcal{L}$ at a sequence of stochastic gradient steps using a given learning rate schedule. In the present example, each learning rate schedule is piecewise constant and can be represented by a vector $\mathbf{x}$ with elements $x_j$ such that $\alpha_t = x_j$ for $T_j \leq t < T_{j+1}$ and $j = 0, ..., d - 1$. Figure 5 shows an example of a piecewise constant learning rate schedule with a different constant learning rate for each of four intervals $T_i < t < T_{j+1}$ for $j = 0, ...,3$. In examples, the number of intervals $d$ is much smaller than the total number of stochastic gradient iterations $T_d$, which reduces the computational cost of generating trace predictions compared with allowing the learning rate to change at each iteration, and facilitates searching for optimal learning rate schedules, as will be explained in more detail hereafter.

The method proceeds with generating, at S404, a trace model using the stored trace data for the initial set of tasks. The generated trace model is arranged to generate predicted optimisation traces for a given machine learning task and learning rate schedule. Denoting $\theta_t(\mathbf{x}, \omega)$ to be values of a set of trainable parameters of a machine learning model associated with a task $\omega$ at iteration $t$ of a stochastic gradient run with learning rate schedule $\mathbf{x}$, the corresponding value of the objective function is given by $y(\mathbf{x}, t, \omega) = \mathcal{L}[\theta_t(\mathbf{x}, \omega)].$ The values of the objective function at the changing points of the learning rate are denoted $Y_{k,\omega} = y(x, T_k, \omega)$. The trace model allows statistical information to be computed or estimated, such as quantiles, variances and expectation values for $y(\mathbf{x},t,\omega)$ or $Y_{k,\omega}$. In order for the trace model to be able to distinguish between different machine learning tasks, it is assumed that the tasks are embedded in a low-dimensional latent space (for example having one, two, three, or any other suitable number of dimensions), such

that $\omega \to w \in \mathbb{R}^L$. The value of the latent variable $w$ can be learned for a given task, allowing the trace model to generate predicted optimisation traces in dependence on a given learning rate schedule **x** and a given value of the latent variable $w$. Specific implementations of the trace model and a method for generating the trace model will be described in more detail hereafter.

Having generated the trace model, the method proceeds with determining, at S406, an informative learning rate schedule **x'** and machine learning task $\omega'$ in the class. The informative learning rate schedule and task are determined using criteria which ensure that trace data generated for the task $\omega'$ using the learning rate schedule **x'** is highly informative and, when incorporated into the trace model, is expected to improve the quality of predictions made by the trace model. In order to determine the learning rate schedule **x'** and task $\omega'$, a reference set of learning rate schedules is first determined for the tasks in the initial set. In an example, each learning rate schedule in the reference set is a maximiser for an upper confidence bound of an expected final value of a corresponding optimisation trace. The reference set of learning rate schedules is thus given by $\widehat{\mathbb{X}}^* = \{\widehat{\mathbf{x}}^{1*}, \ldots, \widehat{\mathbf{x}}^{M*}\}$, in which:

$$\widehat{\mathbf{x}}^{i*} = \underset{\mathbf{x} \in \mathbb{X}}{\operatorname{argmax}} \; q_\alpha[y(\mathbf{x}, T_d, \omega_i)], \qquad (2)$$

for $i = 1,\ldots,M$, where $\alpha \in (0.5,1)$ such that the quantile $q_\alpha$ defines an upper confidence bound for $y$ as predicted by the trace model, $\omega_i$ denotes the $i^{\text{th}}$ task in the initial set, and the set $\mathbb{X}$ denotes all permissible learning rate schedules. In an example, the set $\mathbb{X}$ is given by $\mathbb{X} = \{\mathbf{x} \in [0,1]^d : 0.1 \leq x_j / x_{j+1} \leq 10, 0 \leq j \leq d - 2\}$. In other words, the set of permissible learning rate schedules includes piecewise constant learning rate schedules for which each learning rate is between zero and one, in which the learning rate changes by no more than an order of magnitude at each transition. In other examples, the set of permissible learning rate schedules may be defined differently, for example using a different permissible range or by requiring that the learning rate decreases monotonically. The reference set of learning rate schedules may also be chosen differently, for example to maximise an expected final value of the optimisation trace, as opposed to an upper confidence bound.

Having determined the reference set $\widehat{\mathbb{X}}^*$ of learning rate schedules, the method proceeds with determining the learning rate schedule **x'** and the machine learning task $\omega'$ in order to gather informative trace data which is expected to improve the predictive quality of the trace model. In the present example, the learning rate schedule **x'** and task $\omega'$ are chosen to reduce an average variance for final values of optimisation traces corresponding to the initial set of tasks using the reference set of learning rate schedules. In this way, when trace data from the further machine learning task is incorporated into the trace model, the uncertainty of predictions generated by the trace model is expected to be reduced, particularly for optimistic learning rate schedules. The average variance, conditioned on a new set $\mathbf{y}_{\mathbf{x}',\omega'}$ of optimisation trace observations, is given by Equation (3):

$$\bar{J}(\mathbf{x}', \omega') = \frac{1}{M} \sum_{i=1}^{M} \operatorname{Var}\left[y(\widehat{\mathbf{x}}^{i*}, T_d, \omega_i) | \mathbf{y}_{\mathbf{x}',\omega'}\right], \qquad (3)$$

where $\operatorname{Var}[\cdot | \mathbf{y}_{\mathbf{x}',\omega'}]$ denotes the variance, conditional on $\mathbf{y}_{\mathbf{x}',\omega'}$. Depending on the form of the trace model, the average conditional variance $\bar{J}(\mathbf{x}',\omega')$ may be intractable, but can generally be estimated using Monte-Carlo sampling. In such cases, the average conditional variance is replaced with its expectation, resulting in the following criterion for determining the learning rate schedule **x'** and the machine learning task $\omega'$:

$$\mathbf{x}', \omega' = \underset{\mathbf{x}, \omega}{\operatorname{argmin}} \; \mathbb{E}_{\mathbf{y}_{\mathbf{x},\omega'}}\left(\bar{J}(\mathbf{x}, \omega)\right) \qquad (4)$$

The criterion of Equation (4) is evaluated using a double Monte Carlo loop (an inner loop for the variance and an outer loop for the expectation). In the present example, samples used to evaluate the criterion of Equation (4) are generated using the reparameterisation trick, allowing reverse mode differentiation to be performed such that the learning rate schedule **x'** can be determined using stochastic gradient descent or a variant thereof. The task $\omega'$ is determined

using an exhaustive search over available tasks. The machine learning task $\omega'$ may be identical to one of the tasks $\omega_i$ in the initial set, or may be different from any of the tasks in the initial set. In other examples, the task $\omega'$ is predetermined, and the objective of Equation (4) is used only to determine an informative learning rate schedule.

Having determined an informative learning rate schedule $\mathbf{x}'$ and task $\omega'$, the data processing system generates, at S408, new trace data by performing one or more stochastic gradient runs on the task $\omega'$ using the learning rate schedule $\mathbf{x}'$ . The routine then returns to S402, with the new trace data being stored with the original trace data and the trace model being updated to take account of the new trace data. This loop may be performed over multiple iterations, with new trace data being incorporated into the trace model at each iteration, and the predictive performance of the trace model improving at each iteration.

After a final iteration of being updated at S404, the trace model is ready to be used for determining, at S410, a learning rate schedule $\mathbf{x}_{new}$ for any new task $\omega_{new}$ in the given class. Unlike at S406, where a learning rate schedule was chosen to improve the predictive performance of the trace model, at S410 a learning rate schedule is determined to give a best predicted performance of the stochastic gradient method for the new task. The method by which the learning rate schedule $\mathbf{x}_{new}$ is determined depends on context. Three examples are given below.

In the first example, a learning rate schedule $\mathbf{x}_{new}$ is determined for a new, unseen task. In this example, $\mathbf{x}_{new}$ is chosen to maximise a predicted final value $y(\mathbf{x}_{new}, T_d, \omega_{new})$ of an optimisation trace, averaged over all possible values of $w_{new}$ for tasks in the class. The average is calculated using Monte-Carlo sampling, assuming a probability measure for $w_{new}$ such as a Lebesgue measure over the convex hull of $w_1, ..., w_M$, and the learning rate schedule $\mathbf{x}_{new}$ is determined using stochastic gradient ascent or a variant thereof. Provided that the new task $\omega_{new}$ does not depart significantly from the machine learning tasks used to train the trace model (in which case $w_{new}$ is likely to be contained within, or at least be near to, the convex hull of $w_1, ..., w_M$), this method is expected to result in a reasonably good learning rate schedule for the new task. However, in situations where the machine learning tasks differ from one another significantly, it is likely that a universally tuned learning rate of this type will result in suboptimal performance.

In a second example, a learning rate schedule $\mathbf{x}_{new}$ is determined for a new, unseen task. In this example, computing budget is invested in determining the value of the latent variable $\omega_{new}$ prior to the determination of the learning rate schedule $\mathbf{x}_{new}$. In this way, the learning rate schedule $\mathbf{x}_{new}$ can be tailored to the specific new task $\omega_{new}$. In this example, an initial learning rate schedule $\mathbf{x}_{:j}$ is implemented for a predetermined number of stochastic gradient steps (for example $T_j$ stochastic gradient steps, where $j << d$), resulting in trace data from which $w_{new}$ is learned. Once $w_{new}$ has been learned, a new learning rate schedule is determined which maximises the predicted final value $y(\mathbf{x}_{new}, T_d, \omega_{new})$ of the optimisation trace or, alternatively, which maximises a predicted quantile $q_\alpha$ for the final value of the optimisation trace (with $\alpha = 0.5$ for a risk-neutral strategy, $\alpha < 0.5$ for a risk-averse strategy, or $\alpha > 0.5$ for an optimistic strategy). The initial learning rate schedule $\mathbf{x}_{:j}$ may be chosen to be as informative as possible about the value of $w_{new}$; in a specific example, an informative initial learning rate schedule $\mathbf{x}_{:j}$ is determined as one which maximises the proportion of the variance attributable to the uncertainty in $w_{new}$, i.e. according to the criterion of Equation (5):

$$\mathbf{x}_{:j}^* = \underset{\mathbf{x}_{:j} \in [0,1]^j}{\operatorname{argmax}} \sum_{t=0}^{T_i} \frac{\mathbb{E}_w\left[\operatorname{Var}\left(Y\left(\mathbf{x}_{:j}, t, w\right) | w\right)\right]}{\operatorname{Var}\left(Y\left(\mathbf{x}_{:j}, t, w\right)\right)}. \tag{5}$$

The expectation and variances in Equation (5) are estimated using Monte-Carlo sampling, assuming $w$ has an associated probability measure such as a Lebesgue measure over the convex hull of $w_1, ..., w_M$.

In the above examples, it is assumed that the new task $\omega_{new}$ is different from any of the tasks in the initial set of tasks. In the third example, the new task $\omega_{new}$ is identical to one of the tasks in the initial set. In this case, the latent variable $w_{new}$ has already been learned, so the trace model can be readily used to determine a learning rate schedule $\mathbf{x}_{new}$ which maximises the predicted final value $y(\mathbf{x}_{new}, T_d, \omega_{new})$ of the optimisation trace or, alternatively, which maximises a predicted quantile $q_\alpha$ for the final value of the optimisation trace (with $\alpha = 0.5$ for a risk-neutral strategy, $\alpha < 0.5$ for a risk-averse strategy, or $\alpha > 0.5$ for an optimistic strategy). In this way, a new learning rate schedule can be determined for all of the tasks in the initial set. This strategy may result in a less computationally expensive and time-consuming method of performing multiple related machine learning tasks, compared with independently determining a learning rate schedule for each task using heuristics or trial and error.

Each of the examples described above can result in machine learning models being trained in less time and using fewer overall processing operations than is possible using existing methods. It is stressed that the methods described herein do not modify the machine learning models themselves, but provide input parameters for training the machine learning models, resulting in improved performance when judged using technical criteria, such as the total number of processing operations used in the training process.

The method described above involves three main stages. In the first stage, a trace model is generated using trace data relating to an initial set of machine learning tasks. In the second stage, further trace data is generated using learning rate schedules designed to improve the predictive performance of the trace model, and the trace model is updated using the further trace data. In the third stage, the updated trace model is used to determine a learning rate schedule for a further machine learning task, which may be a new, unseen task, or may be one of the tasks in the initial set. As indicated by the dashed boxes S406 and S408 in Figure 4, the second step described above in which further trace data is generated to update the trace model is optional. In some examples, the trace model is generated as described with reference to S402 and S404, and the resulting model is then used to determine a learning rate schedule for a new task as described with reference to S410.

**Example predictive trace model**

An example of a probabilistic trace model for predicting values of optimisation traces in an interval $T_k < t < T_{k+1}$ is given by Equation (6):

$$y(\mathbf{x}, t, \omega) = Y_k + \Gamma\big(\{Y_{k-l}\}_{l=0}^{q-1}, \{x_{k-l}\}_{l=0}^{q-1}, \omega, t - T_k\big), \qquad (6)$$

where $\Gamma$ is a specified function and $q \geq 1$. Equation (6) states that the increment in the objective function within a given interval depends on the value of the objective function at the start of the interval and at the start of $q$ - 1 preceding intervals, and the learning rate within the interval and $q$ - 1 preceding intervals. In other words, the model of Equation (6) is Markovian, with $q$ denoting the order of the Markov chain. Higher values of $q$ result in a model which takes into account more preceding intervals, but also result in higher computational overheads for generating and updating the predictive trace model. In experiments conducted by the inventors, it has been observed that in many cases setting $q$ = 1 achieves the correct balance between accuracy and acceptable overheads.

In an example, the increment in the objective function is assumed to be given by a link function $\eta$ which has parameters depending on a latent function $f$ with one or more components distributed as Gaussian processes. The latent function is dependent on a latent variable $\omega$ indicating machine learning task, along with the learning rate and the value of the objective function at the start of the interval and $q$ - 1 preceding intervals, resulting in a model as shown in Equation (7):

$$y(\mathbf{x}, t, \omega) = Y_k + \eta\Big[f\big(\{Y_{k-l}\}_{l=0}^{q-1}, \{x_{k-l}\}_{l=0}^{q-1}, \omega\big), t - T_k\Big]. \qquad (7)$$

One example of a suitable link function $\eta$ is a linear link function $\eta_{\text{lin}}(f, t) = \Phi(f_1)t$, which has a slope $\Phi(f_1)$ depending on the sole component $f_1$ of the latent function A second example is an exponential link function $\eta_{\text{exp}}(f,t) = \phi(A)(1 - \exp(-\phi(f_2)t))$, which has a logit offset $\phi(f_1)$ depending on a first component $f_1$ of the latent function, and a logit rate $\phi(f_2)$ depending on a second component $f_2$ of the latent function. In these examples, $\phi$ is a strictly positive function for ensuring monotonicity of the optimisation traces, for example the softplus function. It is noted that many other examples of link functions are possible, and other forms of the predictive model of Equation (6) may be used of without departing from the scope of the invention.

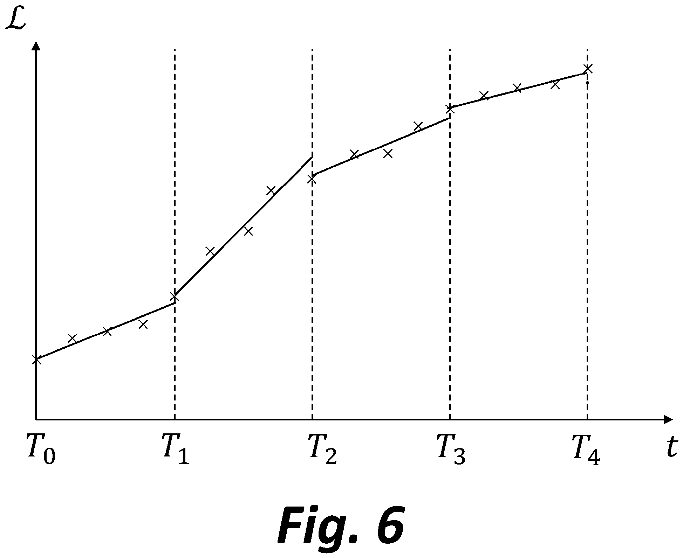

Figure 6 shows an example of a composite optimisation trace predicted using the model of Equation (7) with a linear link function, for the learning rate schedule of Figure 5. The crosses are stochastic estimates of the objective function $\mathcal{L}$ encountered during a stochastic gradient run. The linear link function predicts a gradient of the optimisation trace for each interval $[T_i, T_{i+1}]$,

In the example of a single-component latent function, the latent function is given a Gaussian process prior such that $f \sim \mathrm{GP}(0, k_f(\cdot, \cdot))$, where $k_f$ is a kernel. In an example, the kernel $k_f$ is a product kernel with kernel factors depending respectively on the learning rate at the beginning of the interval, the value of the optimisation trace at the beginning of the interval, and the latent variable indicating the relevant machine learning task. The product kernel is given by Equation (8):

$$k_f\big((Y, x, \omega), (Y', x', \omega')\big) = k_Y(Y, Y') k_x(x, x') k_\omega(\omega, \omega') \qquad (8)$$

wherein of the kernel factors may be, for example, a squared exponential kernel, a Matern kernel, or any other suitable form of kernel. The factor $k_\omega(\cdot, \cdot)$ may be restricted to having a unit length scale without loss of generality, and in practice depends on the embedding variable $w$. In the case of a latent function with multiple components, each component may be given an independent Gaussian process prior, or alternatively the components may be given correlated Gaussian process priors.

In the present example, it is assumed that observations of the trace (in other words, stochastic estimates of the objective function encountered during the optimisation run) are noisy observations of the objective function corrupted by Gaussian noise with variance $\sigma^2$, as shown in Equation (9):

$$y_j^i | f, Y_k^i, x_k^i, t_j^i \sim \mathrm{N}\left(y_j^i \left| \eta\left[ f\left(\{Y_{k-l}^i\}_{l=0}^{q-1}, \{x_{k-l}^i\}_{l=0}^{q-1}, \omega_i\right), t_j^i - T_k\right], \sigma^2\right)\right., \qquad (9)$$

where the index $i$ denotes a given stochastic gradient run. Specifically, $y_j^i$ denotes a stochastic estimate of the objective function encountered on the trace, and $Y_k^i$ denotes a stochastic observation of the objective function at the end of an interval. The initial observations of the objective function are assumed to be Gaussian distributed such that $y_0^i \equiv Y_0^i \sim \mathrm{N}(m_0, \sigma_0^2)$, where the initial mean $m_0$ and the initial variance $\sigma_0^2$ are determined using maximum likelihood estimation.

Updating the predictive trace model amounts to inferring the posterior process or processes of the latent function $f$ conditioned on the trace data. In most cases, the form of the link function $\eta$ prevents exact inference from being performed. Those skilled in the art will be aware of a range of approximate inference methods for Gaussian processes, including expectation propagation, Laplace-based methods, Renyi divergence minimisation, variational Bayesian methods, and sampling methods such as Markov chain Monte Carlo.

A particularly advantageous implementation of the present Gaussian process-based trace model is based on sparse variational Bayesian optimisation, in which a variational Gaussian process $q(f)$ is introduced which is determined entirely by a set of inducing points $\mathbf{u} = f(Z)$ corresponding to evaluations of the latent function at a sparse set of $M_Z$ inducing inputs $Z = \{\mathbf{z}_i\}_{i=1}^{M_Z}$. The resulting distribution of the inducing inputs is given by a variational Gaussian distribution $q(\mathbf{u}) = \mathrm{N}(\mathbf{u}|\mathbf{m},\mathbf{S})$, where the mean $\mathbf{m}$ and variance $\mathbf{S}$ are variational parameters to be optimised. Conditioning and marginalising the Gaussian process prior over the inducing inputs $\mathbf{u}$ results in a marginal posterior Gaussian process given by Equation (10):

$$q(f) = \mathrm{GP}(f \,|\, \mu(\cdot), \Sigma(\cdot,\cdot)), \qquad (10)$$

where

$$\mu(\cdot) = \mathbf{k}_Z(\cdot)^{\mathrm{T}} \mathbf{K}_{ZZ}^{-1} \mathbf{m}, \qquad (11)$$

and

$$\Sigma(\cdot,\cdot) = k_f(\cdot,\cdot) + \mathbf{k}_Z(\cdot)^{\mathrm{T}} \mathbf{K}_{ZZ}^{-1} (\mathbf{S} - \mathbf{K}_{ZZ}) \mathbf{K}_{ZZ}^{-1} \mathbf{k}_Z(\cdot), \qquad (12)$$

where $\mathbf{K}_{ZZ}$ is a covariance matrix with elements $[\mathbf{K}_{ZZ}]_{ij} = k_f(\mathbf{z}_i,\mathbf{z}_j)$, and $\mathbf{k}_Z(\cdot)$ is a vector-valued function given by $\mathbf{k}_Z(\cdot) = \left[k_f(\mathbf{z}_i,\cdot)\right]_{i=1}^M$.

The method proceeds by optimising the variational parameters $\mathbf{m}$, $\mathbf{S}$ of the variational normal distribution, along with the embedding variables $w_i$, the inducing inputs $Z$, the variance $\sigma^2$ and any other hyperparameters associated with the Gaussian process model, with respect to an evidence lower bound (ELBO) of the log marginal likelihood $\log p\left(\{y_j^i\}\right)$ of the trace data, as given by Equation (13):

$$\text{ELBO} = \sum_{i=1}^{N} \sum_{j=1}^{m_i} \mathbb{E}_{q(f)} \left[ \log \mathrm{N} \left( y_j^i \,\middle|\, \eta \left[ f \left( \{Y_{k-l}^i\}_{l=0}^{q-1}, \{x_{k-l}^i\}_{l=0}^{q-1}, \omega_i \right), t_j^i \right. \right. \right. \tag{13}$$

$$\left. \left. \left. - T_k \right], \sigma^2 \right) \right] - \mathrm{KL}[q(\mathbf{u}) \| p(\mathbf{u})],$$

with $k$ such that $T_k \leq t_j^i < T_{k+1}$, and in which $p(\mathbf{u}) = \mathrm{N}(\mathbf{u}|\mathbf{0}, \mathbf{K}_{ZZ})$, $m_i$ is the number of trace observations on the $i$th of $N$ recorded stochastic gradient runs, and KL denotes the Kullback-Leibler divergence. The KL divergence can be computed analytically at a cost of $O(M_Z^3)$ operations, given that both $q(\mathbf{u})$ and $p(\mathbf{u})$ are multivariate Gaussian distributions. By randomly sampling mini-batches of size $N_b$, an unbiased estimate of the expectation term can be computed at a cost of $O(N_b M_Z^2)$ operations, resulting in a total cost of $O(N_b M_Z^2 + M_Z^3)$ for evaluating the ELBO (or its derivatives, using reverse-mode differentiation). By choosing the number $M_Z$ of inducing inputs and the size $N_b$ of the mini-batches to both be much smaller than the total number of recorded observations $Nm_i$, the present method results in significantly improved scalability to large dataset compared with conventional Gaussian process inference methods, which would typically result in a computational cost of $O(N^3 m_i^3)$. Given that optimisation traces typically include large numbers of stochastic gradient steps (particularly in the case of complex, high-dimensional machine learning models), the computational efficiency of the sparse variational method is highly advantageous for updating the predictive trace model.

In some examples, the Gaussian process hyperparameters, the embedding variable and the inducing inputs may be combined with the variational parameters **m,S** and updated in a single update step. In other examples, the hyperparameters and/or the inducing inputs are updated in an inner optimisation loop, and the remaining parameters updated in an outer optimisation loop, or vice-versa. It is noted that the variational parameters **m, S** can be updated using natural gradient descent, whereas the hyperparameters and the inducing inputs cannot be updated using natural gradient descent, as the hyperparameters and the inducing inputs are not associated with a probability distribution, and hence the natural gradient is undefined. For examples in which the variational parameters are updated using natural gradient descent, an effective approach is to update the variational parameters using natural gradient descent followed by updating of the hyperparameters and the inducing inputs using one or more alternative optimisation methods. The resulting hybrid approach alternates between steps of natural gradient descent and the other chosen optimisation method. In a specific example, natural gradient descent is alternated with Adam.

**Results**

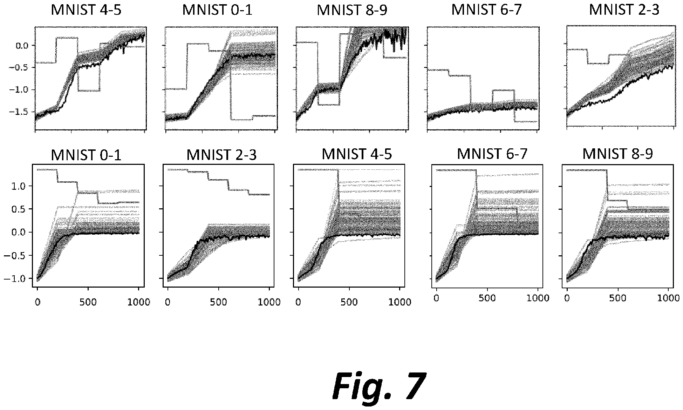

Figure 7 shows the results of a numerical experiment in which five machine learning tasks were performed in accordance with the methods described above. For each task, a neural network-based binary classification model was trained to distinguish between two handwritten digits. Each of the five datasets is a subset of the publicly available Modified National Institute of Standards and Technology (MNIST) dataset, with the first dataset including handwritten zeros and ones, the second including handwritten twos and threes, and so on, with the fifth dataset including handwritten eights and nines. For each task, $T_d$ = 1000 Adam iterations were used to train the neural network model, with piecewise-constant learning rate schedules each containing $d$ = 5 learning rates restricted to the range [10⁻⁵,10⁻³]. Initially, five Adam runs were performed (one for each task), with learning rates chosen using Latin hypercube sampling in logarithmic space. Trace data was collected for these initial runs, from which a probabilistic trace model was generated based on a Gaussian process model with a Matérn-5/2 kernel, an exponential link function, 50 inducing points, and a dimension $L$ = 2 for latent variables. Fifteen further runs were then performed to generate informative trace data as described above, and the trace model was sequentially updated using the informative trace data. Finally, optimised learning rate schedules were determined for all of the tasks, and final optimisation traces were generated using the optimised learning rate schedules. The top frames in Figure 7 show optimisation traces for random learning rate schedules and the bottom frames show optimisation traces for optimised learning rate schedules. In all frames, the solid black curves representing observed traces, the shaded curves representing traces predicted by the trace model, and the piecewise line segments show the learning rate schedules (in log space between 10⁻⁵ and 10⁻³).

It is observed that the optimal learning rate schedules differ from task to task, though in each case the learning rates tend to decrease as the Adam run proceeds. The predicted optimisation traces are uncertain, but only on one side (some predicted traces largely overestimate the true trace but median predicted traces are quite close to the truth).

**Modifications and further embodiments**

The above embodiments are to be understood as illustrative examples of the invention. Further embodiments of the invention are envisaged. For example, the predictive trace model could be implemented using a neural network model, a neural process model, or a deep Gaussian process model. The present method could be used to improve the efficiency of stochastic gradient methods in contexts other than machine learning, for example in statistical inference or any other application of gradient-based optimisation.

In one example, a semiconductor device is provided with logic gates arranged to perform the processing functions of the learning rate controller described herein, namely to: process trace data for a plurality of machine learning tasks in a given class to generate a probabilistic trace model; to generate, for each of a plurality of candidate learning rate schedules, a predicted optimisation trace for a first machine learning task in the class using the probabilistic trace model; and to determine a first learning rate schedule for the first machine learning task from the plurality of candidate learning rate schedules on the basis of the generated predicted optimisation traces.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A computer-implemented method of determining a first learning rate schedule for a first machine learning task in a given class of machine learning tasks, wherein performing any task in the class comprises training a respective machine learning model using a respective dataset, the training comprising updating values of a respective set of parameters for the respective machine learning model in accordance with a sequence of stochastic gradient steps to increase or decrease a value of an objective function for providing performance measures in dependence on changes to the values of the respective set of parameters, the method comprising:

   storing, for each of a plurality of machine learning tasks in the given class, trace data indicative of one or more optimisation traces each comprising stochastic estimates of the objective function as values of the respective set of parameters for the respective machine learning model are updated in accordance with a sequence of stochastic gradient steps using a respective learning rate schedule;
   processing the trace data for the plurality of machine learning tasks to generate a probabilistic trace model operable to generate, in dependence on a given learning rate schedule and a latent variable indicating a given machine learning task in the class, a predicted optimisation trace for the given machine learning task;
   generating, for each of a plurality of candidate learning rate schedules, a predicted optimisation trace for the first machine learning task using the probabilistic trace model; and
   determining the first learning rate schedule from the plurality of candidate learning rate schedules on the basis of the generated predicted optimisation traces.

2. The method of claim 1, comprising:

   determining a respective reference learning rate schedule for each task of the plurality of tasks on the basis of the generated probabilistic trace model;
   determining a second learning rate schedule for a second machine learning task in the given class to reduce an uncertainty for predicted optimisation traces generated by the probabilistic trace model for the plurality of machine learning tasks and the respective reference learning rate schedules;
   generating trace data indicative of one or more optimisation traces for the second machine learning task using the second learning rate schedule; and
   updating the probabilistic trace model using the generated trace data.

3. The method of claim 2, comprising determining the second machine learning task to reduce an uncertainty for predicted optimisation traces generated by the probabilistic trace model for the plurality of machine learning tasks and the respective reference learning rate schedules.

**4.** The method of claim 2 or 3, comprising determining the respective reference learning rate schedule for each task of the plurality of tasks on the basis of an upper confidence bound for predicted optimisation traces for the respective task.

**5.** The method of any preceding claim, wherein the probabilistic trace model comprises a link function for predicting an increment in an optimisation trace for the given machine learning task over a given interval, the link function having parameters depending on a latent function with one or more components distributed as Gaussian processes, the latent function being dependent on:

a learning rate at the beginning of the given interval;
a value of the optimisation trace for the given machine learning task at the beginning of the given interval; and
the latent variable indicating the given machine learning task.

**6.** The method of claim 5, wherein the link function is a linear function with a slope depending on the latent function, or an exponential function with a logit offset and a logit rate each depending on the latent function.

**7.** The method of claim 5 or 6, wherein the Gaussian process for at least one of the components of the latent function includes a product kernel comprising kernel factors depending respectively on the learning rate at the beginning of the given interval, the value of the optimisation trace for the given machine learning task at the beginning of the given interval, and the latent variable indicating the given machine learning task.

**8.** The method of any of claims 5 to 7, wherein generating the probabilistic trace model comprises updating the Gaussian process for at least one of the components of the latent function using sparse variational Bayesian inference.

**9.** The method of any preceding claim, comprising generating the trace data for each of the plurality of tasks, wherein generating the trace data comprises:

setting initial values for the parameters of the respective machine learning model;
selecting a respective learning rate schedule for the task;
updating values of the respective set of parameters for the respective machine learning model in accordance with a sequence of stochastic gradient steps in accordance with the selected respective learning rate schedule to increase or decrease a value of the objective function; and
storing stochastic estimates of the objective function at stochastic gradient steps within the sequence of stochastic gradient steps.

**10.** The method of any preceding claim, wherein generating the predicted optimisation traces for the plurality of candidate learning rate schedules comprises:

initialising a current candidate learning rate schedule; and
iteratively:

generating a predicted optimisation trace for the current candidate learning rate schedule; and
updating the current candidate learning rate schedule using a stochastic gradient method to increase or decrease a value of an optimisation objective depending on the predicted optimisation trace generated for the current candidate learning rate schedule, and

wherein determining the first learning rate schedule comprises determining that a stopping condition is satisfied.

**11.** The method of any preceding claim, comprising determining a latent variable indicating the first machine learning task, wherein generating the predicted optimisation traces for the first machine learning rate task is in dependence on the determined latent variable.

**12.** The method of any preceding claim, wherein the first machine learning task is identical to one of the tasks of the plurality of tasks.

**13.** The method of any preceding claim, comprising performing the first machine learning task using the first learning rate schedule.

**14.** A data processing system arranged to determine a first learning rate schedule for a first machine learning task in a given class of machine learning tasks, wherein performing any task in the class comprises training a respective machine learning model using a respective dataset, the training comprising updating values of a respective set of parameters for the respective machine learning model in accordance with a sequence of stochastic gradient steps to increase or decrease a value of an objective function for providing performance measures in dependence on changes to the values of the respective set of parameters, wherein the data processing system is arranged to:

store, for each of a plurality of machine learning tasks in the given class, trace data indicative of one or more optimisation traces each comprising stochastic estimates of the objective function as values of the respective set of parameters for the respective machine learning model are updated in accordance with a sequence of stochastic gradient steps using a respective learning rate schedule;

process the trace data for the plurality of machine learning tasks to generate a probabilistic trace model operable to generate, in dependence on a given learning rate schedule and a latent variable indicating a given machine learning task in the given class, a predicted optimisation trace for the given machine learning task;

generate, for each of a plurality of candidate learning rate schedules, a predicted optimisation trace for the first machine learning task using the probabilistic trace model; and

determine the first learning rate schedule from the plurality of candidate learning rate schedules on the basis of the generated predicted optimisation traces.

**15.** A non-transient storage medium comprising computer-readable instructions which, when executed by processing circuitry of a computer, cause the computer to perform the method of any of claims 1 to 13.

**Fig. 1**

**Fig. 2**

**Fig. 3**

400

S402

Store trace data

S404

Generate/update trace model

S406

Determine informative learning
rate schedule and task

S408

Generate trace data

S410

Determine learning rate schedule
for new task

*Fig. 4*

**Fig. 5**

**Fig. 6**

**Fig. 7**

Europäisches
Patentamt

European
Patent Office

Office européen
des brevets

# EUROPEAN SEARCH REPORT

Application Number

EP 20 15 3736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAX JADERBERG ET AL: "Population Based Training of Neural Networks", ARXIV.ORG, CORNELL UNIVERSITY LIBRARY, 201 OLIN LIBRARY CORNELL UNIVERSITY ITHACA, NY 14853, 27 November 2017 (2017-11-27), XP081300118, * abstract * * sections 1, 3, 4 and subsections thereof * * page 18 *  ----- | 1-15 | INV. G06N3/04 G06N3/08 G06N7/00 G06N20/00 G06N20/10 |

TECHNICAL FIELDS
SEARCHED (IPC)

G06N

The present search report has been drawn up for all claims

| Place of search | Date of completion of the search | Examiner |
|---|---|---|
| The Hague | 15 July 2020 | Papadakis, Georgios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)